(19) **Europäisches Patentamt**

**European Patent Office**

**Office européen des brevets**

(11) Veröffentlichungsnummer: **0 304 754 B1**

(12) # EUROPÄISCHE PATENTSCHRIFT

(45) Veröffentlichungstag der Patentschrift: **16.12.92**

(51) Int. Cl.⁵: **C09D 5/44**, C09F 9/00

(21) Anmeldenummer: **88113213.8**

(22) Anmeldetag: **13.08.88**

---

(54) **Verfahren zur Katalysierung der Vernetzung von kathodisch abscheidbaren Lackbindemitteln.**

---

(30) Priorität: **25.08.87 AT 2118/87**

(43) Veröffentlichungstag der Anmeldung:
**01.03.89 Patentblatt 89/09**

(45) Bekanntmachung des Hinweises auf die
Patenterteilung:
**16.12.92 Patentblatt 92/51**

(84) Benannte Vertragsstaaten:
**DE ES FR GB IT**

(56) Entgegenhaltungen:
**EP-A- 0 025 554**
**EP-A- 0 065 163**
**DE-A- 2 634 085**

(73) Patentinhaber: **VIANOVA KUNSTHARZ AKTIEN-GESELLSCHAFT**
**Postfach 191 Leechgasse 21**
**A-8011 Graz(AT)**

(72) Erfinder: **Hönig, Helmut, Dr.**
**Seebachergasse 10**
**A-8010 Graz(AT)**
Erfinder: **Matzer, Herbert**
**Grossgrabenweg 21**
**A-8010 Graz(AT)**
Erfinder: **Pampouchidis, Georg, Dr.**
**Obere Teichstrasse 31**
**A-8010 Graz(AT)**

EP 0 304 754 B1

**Beschreibung**

Die Erfindung betrifft ein Verfahren zur Katalysierung der Vernetzung von kathodisch abscheidbaren Lackbindemitteln auf Basis von ethylenische Doppelbindungen tragenden Harzen.

Es ist seit langem bekannt, bei kathodisch abscheidbaren Lackbindemitteln, die durch Umurethanisierung vernetzbar sind, die Vernetzungsreaktion durch Metallverbindungen zu katalysieren und dadurch die notwendige Härtungstemperatur herabzusetzen bzw. die Einbrennzeit zu verkürzen. So werden in der DE-OS 25 41 234 Acetate, Naphthenate, Oleate, Chromate, Phosphate u. dgl. von Wismuth, Blei, Zinn, Eisen, Kobalt, Nickel, Aluminium, Zink, Mangan, Kupfer, Zirkonium u. dgl. für diesen Zweck eingesetzt. In anderen Literaturstellen wird der Zusatz von wasserlöslichen Metallsalzen zur Verbesserung der Korrosionsfestigkeit angegeben. Gemäß DE-OS 24 57 437 werden wasserlösliche Salze von Kobalt, Nickel, Cadmium, Zinn, Antimon, Zink oder Kupfer verwendet, während in der DE-OS 28 14 439 wasserlösliche Bleiverbindungen, insbesonders Bleiacetat und Bleilactat dem Elektrotauchbad zugesetzt werden.

In der EP-A-12 463 werden als Katalysatoren für Umesterungsreaktionen Metallsalze oder Metallkomplexe, die in flüssigen Kohlenwasserstoffen löslich sind, wie Octoate oder Naphthenate von Blei, Zink, Calcium, Barium, Eisen, sowie einer großen Anzahl weiterer Metalle, angegeben.

In der EP-A-82 214 wird empfohlen, die als Katalysatoren eingesetzten Oktoate, Naphthenate, Borate oder Acetylacetonate von Kobalt, Kupfer, Blei, Nickel und Mangan mit dem Bindemittel zu reagieren, um eine Abtrennung über die Ultrafiltration zu vermeiden.

Nach dem derzeitigen Stand der Technik werden Lacke auf Basis dieser Bindemittel mit einem Gehalt an Bleiionen formuliert, die entweder durch Einsatz teilweise säurelöslicher Bleipigmente oder Zusatz von löslichen Bleisalzen eingebracht werden.

Ein Zusatz von Eisenverbindungen als Katalysatoren bei kathodisch abscheidbaren Lacken erfolgt in der Praxis nicht, da die Erfahrung gezeigt hat, daß Eisenionen, wenn sie ungewollt in der Anlage durch Verwendung von Nicht-Edelstahlteilen entstehen (sog. Anlagenkorrosion), zu einer starken Versprödung der abgeschiedenen und eingebrannten Lackfilme führen.

Überraschenderweise wurde nun gefunden, daß Eisenacetylacetonat eine spezifische katalytische Wirkung bei der Vernetzung von kationischen Lackbindemitteln zeigt, welche polymerisierbare, endständige ethylenische Doppelbindungen aufweisen.

Die vorliegende Erfindung betrifft demgemäß ein Verfahren zur Katalysierung der Vernetzung von kathodisch abscheidbaren Lackbindemitteln, welche polymerisierbare, endständige ethylenische Doppelbindungen aufweisen, welches dadurch gekennzeichnet ist, daß man dem Harz vor dem Zusatz von Wasser 0,2 bis 2,0 Gew.-%, vorzugsweise 0,5 bis 2,0 Gew.-%, Eisenacetylacetonat, bezogen auf dessen Gehalt an Eisen und berechnet auf den nichtflüchtigen Bindemittelanteil, zusetzt und homogen einmischt.

Die Erfindung betrifft weiters den in dieser Weise katalysierten kathodisch abscheidbaren Elektrotauchlack.

Durch das erfindungsgemäße Verfahren ist es möglich, unter Vermeidung des aus Umweltgründen unerwünschten Bleigehalts oder auch ohne Zuhilfenahme anderer diesbezüglich zweifelhafter Antikorrosionspigmente, die Qualität der Lackfilme zumindest beizubehalten. Die Korrosionstests auf Blankblech werden durch den erfindungsgemäß eingesetzten Katalysator in vielen Fällen wesentlich verbessert.

Die für das erfindungsgemäße Verfahren besonders geeignete Harzgruppe ist aus der Patentliteratur bekannt und wird beispielsweise in den US-PSS 4,238,594, 4,320,220, 4,147,676, 4,174,332 bzw. der EP-A-30 692 beschrieben. Die Bindemittel auf der Basis von Polykondensations-oder Polyadditions- oder Polymerisationsharzen, insbesonders auf Basis von modifizierten Epoxidharzen sind durch die Anwesenheit von endständigen Doppelbindungen gekennzeichnet, wobei die Doppelbindungen durch Reaktion von OH-Gruppen tragenden Harzen mit ungesättigten Monoisocyanaten, z. B. Umsetzungsprodukten aus äquimolaren Mengen eines Diisocyanates und eines Hydroxyalkyl(meth)acrylates, eingeführt werden. Die Produkte härten im wesentlichen durch thermische Polymerisation.

Das Eisenacetylacetonat kann als 10 bis 15 %ige Lösung in Aceton dem Bindemittel zugesetzt werden. Vorzugsweise wird das Eisenacetylacetonat als Pulver zusammen mit den Pigmenten und/oder Füllstoffen z. B. Ruß, Aluminiumsilikat, Titandioxid, dem Bindemittel zugesetzt, eindispergiert und vermahlen. Gegebenenfalls wird der Katalysator einer harzartigen Zumischkomponente oder einer, ein harzartiges Anreibemedium enthaltenden Pigmentpaste zugesetzt, bevor die Harzkomponente oder das Bindemittel(system) mit Wasser verdünnt wird. Das Eisenacetylacetonat wird in einer Menge,bezogen auf dessen Gehalt an Eisen, von 0,2 bis 2,0 Gew.-%, berechnet auf den nichtflüchtigen Bindemittelanteil, zugesetzt. Vorzugsweise liegt der Fe-Gehalt bei mindestens 0,5 Gew.-% (Metall, bezogen auf Festharz).

Die Formulierung kathodisch abscheidbarer Lacke, ihre Verarbeitung, insbesondere im Elektrotauchlakkierverfahren, sowie die Prüfung der Lackfilme sind dem Fachmann bekannt bzw. in der Literatur beschrieben.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Als Harzbasis für die Beispiele wurden Bindemittel eingesetzt, wie sie in der AT-PS 353 369 beansprucht werden. Es handelt sich dabei um kathodisch abscheidbare Harzkombinationen, die eine Doppelbindungszahl von mind. 0,8 aufweisen. Die Doppelbindungszahl (DBz) ist als die Anzahl der end- und seitenständigen Doppelbindungen pro 1000 Molekulargewichtseinheiten definiert. Die Anzahl der basischen Gruppen pro 1000 Molekulargewichtseinheiten ist durch die BNz gegeben.

Bindemittelkomponente (A)

A 1) In einem mit Rührer, Thermometer, Tropftrichter und Rückflußkühler ausgestatteten Reaktionsgefäß werden 1000 g eines Epoxidharzes auf Bisphenol A-Basis (Epoxy-Äquivalent ca. 500) in 492 g Ethylglycolacetat bei 60 bis 70°C gelöst, 0,2 Hydrochinon und 144 g Acrylsäure zugegeben und die Temperatur auf 100 bis 110°C gesteigert. Die Reaktion wird bei dieser Temperatur bis zu einer Säurezahl von unter 5 mg KOH/g geführt (DBz = 1,75). Anschließend wird das Reaktionsprodukt bei 60 bis 70°C mit 652 g einer 70%igen Lösung in Ethylglykolacetat eines basischen Monoisocyanats (aus äquimolaren Mengen Toluylendiisocyanat und Dimethylethanolamin) versetzt und bis zu einem NCO-Wert von praktisch 0 reagiert (DBz = 1,25 BNz = 1,1).

A 2) 520 g eines Epoxidharzes auf Bisphenol A-Basis (Epoxy-Äquivalent ca. 260) werden in 465 g Ethylglykolacetat gelöst und wie in (A 1) mit 564 g eines Halbesters aus Tetrahydrophthalsäureanhydrid und Hydroxyethylmethacrylat umgesetzt (DBz = 1,85). Das Reaktionsprodukt wurde weiter mit 750 g der auch in (A 1) eingesetzten Lösung eines basischen Monoisocyanats umgesetzt (DBz = 1,24, BNz = 1,24).

Bindemittelkomponente (B)

B 1) In einem mit Rührer, Thermometer, Tropftrichter und Rückflußkühler ausgestatteten Reaktionsgefäß werden 400 g eines Epoxidharzes auf Bisphenol A-Basis (Epoxy-Äquivalent ca. 200) in 172 g Ethylglykolacetat bei 60 bis 70°C gelöst und bei 90 bis 120°C während 1 h 210 g Diethanolamin zugetropft. Anschließend wird auf 150°C erhitzt und 1 weitere Stunde reagiert. In weiterer Folge wird das Reaktionsprodukt bei 60 bis 70°C mit 830 g einer 70%igen Lösung in Ethylglykolacetat eines ungesättigten Monoisocyanats (aus äquimolaren Mengen Toluylendiisocyanat und Hydroxyethylacrylat) bis zu einem NCO-Wert von praktisch 0 umgesetzt (DBz = 1,68, BNz = 1,68).

B 2) Wie unter B 1) werden 500 g eines Epoxidharzes auf Bisphenol A-Basis (Epoxy-Äquivalent ca. 250), gelöst in 215 g Ethylglykolacetat, mit 210 g Diethanolamin reagiert und anschließend mit 995 g der auch in B 1) eingesetzten Monoisocyanatlösung umgesetzt (DBz = 1,71, BNz = 1,42).

Bindemittelkombinationen

Die Bindemittel werden durch Mischen bei max. 70°C aus den Komponenten in den unten angegebenen Mengenverhältnissen (Festharz) hergestellt.

BM I      100 Tle A 1 + 33 Tle B 2

BM II     100 Tle A 2 + 30 Tle B 1

Die Bindemittelkombinationen wurden mit 40 Millimol Essigsäure pro 100 g Festharz versetzt und mit Wasser auf einen Festkörpergehalt von 12 Gew.-% verdünnt. Die Abscheidung auf den als Kathode geschalteten phosphatierten Stahlblechen erfolgte als Klarlack in üblicher Weise unter Bedingungen, daß eine Schichtstärke von 20 - 22 μm erreicht wurde.

Die Zusätze von Fe-acetylacetonat wurden vor der Zugabe der Essigsäure gründlich in das Harz eingemischt.

Die Prüfung der Vernetzung erfolgte nach 24stündiger Lagerung der Bleche bei Raumtemperatur durch den sogenannten Acetontest. Die angegebene Zeit ist die maximale Einwirkungsdauer eines Acetontropfens, nach welcher noch keine Verletzung des Lackfilms mit dem Fingernagel möglich ist.

Der Salzsprühtest erfolgte nach ASTM B 117-64 auf nicht vorbehandeltem entfetteten Stahlblech. Nach der angegebenen Zeit liegt ein Korrosinsangriff vor, der eine Breite von ca. 2 mm, gemessen vom Kreuzschnitt erreicht hat.

Die Steinschlagbeständigkeit wird durch zweimaliges Beschießen der Lackoberfläche mit scharfkantigem Stahlschrott (0,5 kg, 3 bar Preßluft) und anschließendes. Überkleben und Abreißen einer Selbstklebefolie geprüft. Der verbleibende haftende Lackfilm wird als Prozentanteil der Gesamtfläche angegeben.

Die Ergebnisse sind in der nachfolgenden Tabelle zusammengefaßt. Unabhängig von der Art der Zugabe des Katalysators, d. h. entweder als Lösung oder als Feststoff (mit dem Pigment), werden im wesentlichen identische Prüfergebnisse erhalten.

| Bindemittel Einbrennbedingungen | Acetontest (Klarlack) Sekunden % Fe als Fe-acetylactonat | | | | |
|---|---|---|---|---|---|
| | 0 | 0,2 | 0,5 | 1,0 | 2,0 |
| BM I | | | | | |
| 15/160 | ca. 5 | 60 | ca.120 | über 120 | über 120 |
| 15/180 | ca. 5 | 90 | über 120 | über 120 | über 120 |
| BM II | | | | | |
| 15/160 | ca. 5 | ca.10 | 30 | 75 | über 120 |
| 15/180 | ca. 5 | 20 | 45 | ca. 120 | über 120 |
| | Salzsprühtest (Klarlack) Stden | | | | |
| BM I | | | | | |
| 15/160 | 96 | 240 | 288 | 360 | über 360 |
| 15/180 | 168 | 240 | 360 | über 360 | über 360 |
| BM II | | | | | |
| 15/160 | 48 | 96 | 120 | 216 | 312 |
| 15/180 | 96 | 120 | 168 | 336 | über 360 |
| | Steinschlagtest (Klarlack) % | | | | |
| BM I | | | | | |
| 15/180 | 60 | 80 | 90 | 95 | 95 |
| BM II | | | | | |
| 15/180 | 40 | 70 | 80 | 95 | 90 |

**Patentansprüche**
**Patentansprüche für folgende Vertragsstaaten : DE, GB, FR, IT**

1. Verfahren zur Katalysierung der Vernetzung von kathodisch abscheidbaren Lackbindemitteln, welche polymerisierbare, endständige ethylenische Doppelbindungen aufweisen, dadurch gekennzeichnet, daß man dem Harz vor dem Zusatz von Wasser 0,2 bis 2,0 Gew.-%, vorzugsweise 0,5 bis 2,0 Gew.-%, Eisenacetylacetonat, bezogen auf dessen Gehalt an Eisen und berechnet auf den nichtflüchtigen Bindemittelanteil, zusetzt und homogen einmischt.

2. Verfahren nach Anspruch 1, dadurch gekennzeichnet, daß man das Eisenacetylacetonat in einer Lösung in Aceton zusetzt.

3. Verfahren nach Anspruch 1, dadurch gekennzeichnet, daß man das Eisenacetylacetonat als Feststoff zusammen mit den Pigmenten und/oder Füllstoffen dem Harz zusetzt und eindispergiert.

4. Verfahren nach den Ansprüchen 1 bis 3, dadurch gekennzeichnet, daß man den Katalysator einer harzartigen Zumischkomponente oder einer, ein harzartiges Anreibemedium enthaltenden, Pigmentpaste zumischt und ihn in dieser Form in das Bindemittel(-system) einbringt.

**5.** Kathodisch abscheidbarer Elektrotauchlack auf der Basis von Lackbindemitteln, welche polymerisierbare, endständige ethylenische Doppelbindungen aufweisen, enthaltend 0,2 bis 2,0 Gew.-%, vorzugsweise 0,5 bis 2,0 Gew.-%, Eisenacetylacetonat, bezogen auf dessen Gehalt an Eisen und berechnet auf den nichtflüchtigen Bindemittelanteil.

**Patentansprüche für folgenden Vertragsstaat : ES**

**1.** Verfahren zur Katalysierung der Vernetzung von kathodisch abscheidbaren Lackbindemitteln, welche polymerisierbare, endständige ethylenische Doppelbindungen aufweisen, dadurch gekennzeichnet, daß man dem Harz vor dem Zusatz von Wasser 0,2 bis 2,0 Gew.-%, vorzugsweise 0,5 bis 2,0 Gew.-%, Eisenacetylacetonat, bezogen auf dessen Gehalt an Eisen und berechnet auf den nichtflüchtigen Bindemittelanteil, zusetzt und homogen einmischt.

**2.** Verfahren nach Anspruch 1, dadurch gekennzeichnet, daß man das Eisenacetylacetonat in einer Lösung in Aceton zusetzt.

**3.** Verfahren nach Anspruch 1, dadurch gekennzeichnet, daß man das Eisenacetylacetonat als Feststoff zusammen mit den Pigmenten und/oder Füllstoffen dem Harz zusetzt und eindispergiert.

**4.** Verfahren nach den Ansprüchen 1 bis 3, dadurch gekennzeichnet, daß man den Katalysator einer harzartigen Zumischkomponente oder einer, ein harzartiges Anreibemedium enthaltenden, Pigmentpaste zumischt und ihn in dieser Form in das Bindemittel(-system) einbringt.

**Claims**

**Claims for the following Contracting States : DE, GB, FR, IT**

**1.** Process for catalysing the cross-linking of cathodically depositable paint binders which contain polymerisable, terminal ethylenic double bonds, characterised in that 0.2 to 2.0 % by weight, preferably 0.5 to 2.0 % by weight, of iron acetylacetonate, based on its content of iron and calculated on the non-liquid binder content, is added to the resin before the addition of water and homogeneously mixed in.

**2.** Process according to Claim 1, characterised in that the iron acetylacetonate is added in a solution in acetone.

**3.** Process according to Claim 1, characterised in that the iron acetylacetonate is added as a solid and dispersed in the resin together with the pigments and/or extenders.

**4.** Process according to Claims 1 to 3, characterised in that a resinous admixture component or a pigment paste containing a resinous grinding medium is admixed with the catalyst and the latter is introduced into the binder (system) in this form.

**5.** Cathodically depositable electrocoating paint based on paint binders which contain polymerisable, terminal ethylenic double bonds, comprising 0.2 to 2.0 % by weight, preferably 0.5 to 2.0 % by weight, of iron acetylacetonate, based on its content of iron and calculated on the non-liquid binder content.

**Claims for the following Contracting State : ES**

**1.** Process for catalysing the cross-linking of cathodically depositable paint binders which contain polymerisable, terminal ethylenic double bonds, characterised in that 0.2 to 2.0 % by weight, preferably 0.5 to 2.0 % by weight, of iron acetylacetonate, based on its content of iron and calculated on the non-liquid binder content, is added to the resin before the addition of water and homogeneously mixed in.

**2.** Process according to Claim 1, characterised in that the iron acetylacetonate is added in a solution in acetone.

**3.** Process according to Claim 1, characterised in that the iron acetylacetonate is added as a solid and dispersed in the resin together with the pigments and/or extenders.

4. Process according to Claims 1 to 3, characterised in that a resinous admixture component or a pigment paste containing a resinous grinding medium is admixed with the catalyst and the latter is introduced into the binder (system) in this form.

## Revendications

**Revendications pour les Etats contractants suivants : DE, GB, FR, IT**

1. Procédé pour catalyser la réticulation de liants de vernis pouvant se déposer à la cathode et qui comportent des doubles liaisons éthyléniques terminales polymérisables, caractérisé en ce qu'on ajoute et qu'on mélange de façon homogène à la résine, avant d'ajouter de l'eau, une quantité de 0,2 à 2,0 % en poids, de préférence de 0,5 à 2,0 % en poids, d'acétylacétonate de fer, rapportée à sa teneur en fer et calculée par rapport à la partie non volatile du liant.

2. Procédé selon la revendication 1, caractérisé en ce qu'on ajoute l'acétylacétonate de fer en solution dans l'acétone.

3. Procédé selon la revendication 1, caractérisé en ce qu'on ajoute et qu'on disperse dans la résine l'acétylacétonate de fer sous forme d'un produit solide avec les pigments et/ou les charges.

4. Procédé selon les revendications 1 à 3, caractérisé en ce qu'on mélange le catalyseur avec un constituant de mélange résineux ou une pâte de pigment contenant un milieu de broyage résineux, et en ce qu'on l'introduit sous cette forme dans le liant (ou système de liants).

5. Vernis d'électro-immersion pouvant se déposer à la cathode, à base de liants de vernis qui comportent des doubles liaisons éthyléniques terminales polymérisables, contenant une quantité de 0,2 à 2,0 % en poids, de préférence de 0,5 à 2,0 % en poids d'acétylacétonate de fer, rapportée à sa teneur en fer et calculée par rapport à la partie non volatile du liant.

**Revendications pour l'Etat contractant suivant : ES**

1. Procédé pour catalyser la réticulation de liants de vernis pouvant se déposer à la cathode et qui comportent des doubles liaisons éthyléniques terminales polymérisables, caractérisé en ce qu'on ajoute et qu'on mélange de façon homogène à la résine, avant d'ajouter de l'eau, une quantité de 0,2 à 2,0 % en poids, de préférence de 0,5 à 2,0 % en poids, d'acétylacétonate de fer, rapportée à sa teneur en fer et calculée par rapport à la partie non volatile du liant.

2. Procédé selon la revendication 1, caractérisé en ce qu'on ajoute l'acétylacétonate de fer en solution dans l'acétone.

3. Procédé selon la revendication 1, caractérisé en ce qu'on ajoute et qu'on disperse dans la résine l'acétylacétonate de fer sous forme d'un produit solide avec les pigments et/ou les charges.

4. Procédé selon les revendications 1 à 3, caractérisé en ce qu'on mélange le catalyseur avec un constituant de mélange résineux ou une pâte de pigment contenant un milieu de broyage résineux, et en ce qu'on l'introduit sous cette forme dans le liant (ou système de liants).